# EUROPEAN PATENT APPLICATION

(11) **EP 2 236 024 A1**
(43) Date of publication of application: **06.10.2010**
(21) Application number: 10158706.1
(22) Date of filing: 31.03.2010
(51) Int. Cl.: A01K 1/01

(54) **Manure scraper**

(30) Priority: 02.04.2009 NL 2002707
(71) Applicant: J.O.Z. B.V., 1617 KK Westwoud (NL)
(72) Inventor: Elling, Rick, 1617 KK, Westwoud (NL)
(74) Representative: Hooiveld, Arjen Jan Winfried

(57) **Abstract**

A device for cleaning a stable for cattle, said device comprising a manure scraper (3) provided with at least one manure scraper blade (4) extending at least partially transversely to the longitudinal direction of the stable floor (1) for moving manure present on the floor to a desired location in the stable, and means (8) for moving the manure scrape forward across the stable floor, wherein the device further comprises a spraying device (5) for cleaning and/or disinfecting the floor.

## Description

The present invention relates to a device for cleaning a stable for cattle, said device comprising a manure scraper provided with at least one manure scraper blade extending at least partially transversely to the longitudinal direction of the stable floor for moving manure present on the floor to a desired location in the stable, and means for moving the manure scrape forward across the stable floor.

Such a device, also called a combi-scraper, is generally used in cattle farming for cleaning level floors. The known combi-scraper consists of a manure scraper provided with two scraper blades, which extend transversely to the longitudinal direction of the stable floor, and a chain for pulling the manure scraper forward. As a result of the forward movement of the manure scraper across the stable floor, the manure present on the floor is moved to a desired location in the stable. A drawback of the known combi-scraper is that the manure scraper has difficulty detaching dried manure from the stable floor and shoving it away, so that the floor is cleaned less efficiently. As a result, a thin layer of manure may remain behind on the floor, which may cause animals moving around on the floor to lose their footing. Another drawback of the known combi-scraper is that although at least part of the manure present on the stable floor is removed, the floor is not disinfected.

It is an object of the present invention to eliminate the above drawbacks, that is, to provide a device for cleaning a stable floor which cleans and/or disinfects the stable floor in an efficient and/or hygienic manner.

In order to accomplish that object, the device according to the invention comprises a spraying device for cleaning and/or disinfecting the floor. Spraying the floor with the liquid, for example water, has the advantage that manure present on the floor becomes moist, which makes the manure easier to remove.

In a preferred embodiment of a device according to the invention, the spraying device comprises at least one nozzle extending in the direction in which the manure scraper is moving for spraying liquids on the stable floor to be cleaned and/or disinfected. The nozzle can thus spray in forward direction, in rearward direction and/or even at an angle to the direction of movement of the manure scraper.

In another preferred embodiment of a device according to the invention, the spraying device further comprises a reservoir containing at least one liquid selected from the group consisting of water, a disinfecting and/or cleaning agent and an ammonia-reducing agent, to which reservoir the nozzle is connected.

In another preferred embodiment of a device according to the invention, the reservoir can be manually or automatically filled by means of a central filling station in or near the stable.

In another preferred embodiment of the device according to the invention, the reservoir is mounted on, under or beside the manure scraper. Replenishing can take place via a hose.

In another preferred embodiment of a device according to the invention, the device further comprises at least one further manure scraper blade, which extends at least partially obliquely away from said one manure scraper blade in the direction in which the manure scraper is moving.

In another preferred embodiment of the device according to the invention, said further manure scraper blade is pivotally connected to said one manure scraper blade.

In another preferred embodiment of a device according to the invention, the moving means comprise a chain for pulling the manure scraper forward. Instead of using a chain, it is also possible to effect said movement by means of a cable, a rope, hydraulic means or electric means. In another preferred variant, the manure scraper moves autonomously, for example like a robot.

The invention will now be explained in more detail with reference to a figure illustrated in a drawing, which shows a device according to the invention in perspective view.

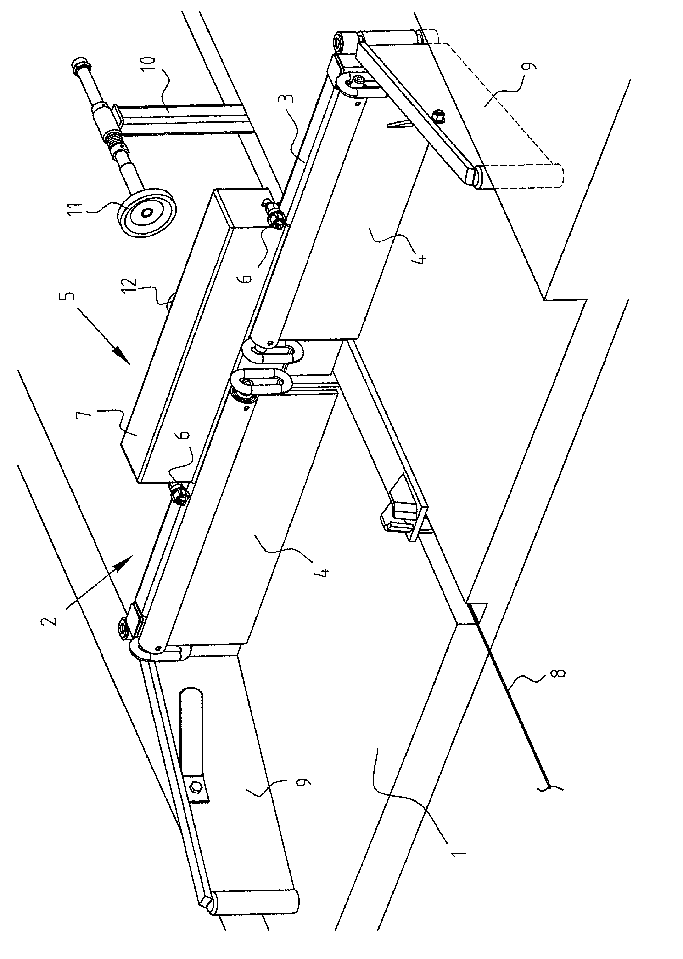

The figure shows a stable floor 1 provided with a device 2 comprising a manure scraper 3 provided with two manure scraper blades 4, which extend transversely to the longitudinal direction of the stable floor 1, and a spraying device 5. The spraying device 5 comprises two nozzles 6 extending transversely to the manure scraper 3 and a reservoir 7 containing a liquid, which is mounted on the manure scraper 3, to which reservoir 7 the nozzles 6 are connected, which nozzles are designed for spraying liquids on the stable floor 1 to be cleaned and/or disinfected. The liquid is preferably selected from the group consisting of water, a disinfecting and/or cleaning agent and an ammonia-reducing agent. The device 1 further comprises a cable 8 for pulling the manure scraper 3 forward across the stable floor 1. Preferably, the manure scraper 3 is provided with two further manure scraper blades 9, which extend at an angle to the manure scraper blades 4 in the direction in which the manure scraper is moving. Said manure scraper blades 9 effect an even more efficient cleaning of the stable floor 1.

The figure also shows a filling station 10 present on the stable floor 1, which filling station is provided with a connection 11, which can be connected to a connection 12 of the reservoir 7, for filling the reservoir. Said connection is present on the stable floor 1 in this embodiment, but it may be present at any desired and/or central location in or near the stable.

The stable floor 1 may also be a rubber or concrete slotted floor.

It is noted that the invention is not limited to the embodiment discussed in the foregoing, but that it also extends to other variants that fall within the scope of the appended claims.

## Claims

1. A device for cleaning a stable for cattle, said device comprising a manure scraper provided with at least one manure scraper blade extending at least partially transversely to the longitudinal direction of the stable floor for moving manure present on the floor to a desired location in the stable, and means for moving the manure scrape forward across the stable floor, **characterised in that** the device further comprises a spraying device for cleaning and/or disinfecting the floor.

2. A device according to claim 1, wherein the spraying device comprises at least one nozzle extending in the direction in which the manure scraper is moving for spraying liquids on the stable floor to be cleaned and/or disinfected.

3. A device according to claim 1 or 2, wherein the spraying device further comprises a reservoir containing at least one liquid selected from the group consisting of water, a disinfecting and/or cleaning agent and an ammonia-reducing agent, to which reservoir the nozzle is connected.

4. A device according to claim 3, wherein the reservoir can be filled by means of a central filling station in or near the stable.

5. A device according to claim 3 or 4, wherein the reservoir is mounted on the manure scraper.

6. A device according to any one of the preceding claims 1-5, further comprising at least one further manure scraper blade, which extends at least partially obliquely away from said one manure scraper blade in the direction in which the manure scraper is moving.

7. A device according to claim 6, wherein said further manure scraper blade is pivotally connected to said one manure scraper blade.

8. A device according to any one of the preceding claims 1-7, wherein the moving means comprise a chain for pulling the manure scraper forward.
